(19) **Europäisches Patentamt**

**European Patent Office**

**Office européen des brevets**

(11) **EP 3 781 902 B1**

(12) **FASCICULE DE BREVET EUROPEEN**

(45) Date de publication et mention
de la délivrance du brevet:
**28.06.2023 Bulletin 2023/26**

(21) Numéro de dépôt: **19724558.2**

(22) Date de dépôt: **19.04.2019**

(51) Classification Internationale des Brevets (IPC):
**G01B 21/08** (2006.01)     **G01B 11/06** (2006.01)

(52) Classification Coopérative des Brevets (CPC):
**G01B 11/0658;** G01B 21/085

(86) Numéro de dépôt international:
**PCT/FR2019/050936**

(87) Numéro de publication internationale:
**WO 2019/202275 (24.10.2019 Gazette 2019/43)**

(54) **DISPOSITIF DE MESURE POUR DÉTERMINER L'ÉPAISSEUR D'UNE COUCHE D'UN MATÉRIAU**

MESSVORRICHTUNG ZUR BESTIMMUNG DER DICKE EINER MATERIALSCHICHT

MEASURING DEVICE FOR DETERMINING THE THICKNESS OF A LAYER OF MATERIAL

(84) Etats contractants désignés:
**AL AT BE BG CH CY CZ DE DK EE ES FI GB GR
HR HU IE IS IT LI LT LU LV MC MK MT NL NO PL
PT RO RS SE SI SK SM TR**

(30) Priorité: **19.04.2018 FR 1853422**

(43) Date de publication de la demande:
**24.02.2021 Bulletin 2021/08**

(73) Titulaires:
• **Renault s.a.s
92100 Boulogne Billancourt (FR)**
• **Enovasense S.A.S
94110 Arceuil (FR)**

(72) Inventeurs:
• **AUBANEL, Laurent
75014 PARIS (FR)**

• **DELAUNAY, David
76150 MAROMME (FR)**
• **INARD-CHARVIN, Jean
94300 VINCENNES (FR)**
• **BRUNO, Geoffrey
75014 PARIS (FR)**

(74) Mandataire: **Jacobacci Coralis Harle
32, rue de l'Arcade
75008 Paris (FR)**

(56) Documents cités:
DE-A1- 3 939 877     FR-A1- 3 007 831
US-A- 5 785 651      US-A- 5 803 606
US-A1- 2007 086 000

**Description**

DOMAINE TECHNIQUE AUQUEL SE RAPPORTE L'INVENTION

La présente invention concerne de manière générale la mesure de l'épaisseur d'un revêtement.

Elle trouve une application particulièrement avantageuse dans la mesure de l'épaisseur d'un revêtement dans un cylindre d'un moteur d'un véhicule automobile.

Elle concerne plus particulièrement un dispositif de mesure pour déterminer l'épaisseur d'une couche d'un matériau. Le dispositif de mesure comporte :

- des moyens de commande électrique adaptés à délivrer un signal de commande sinusoïdal ayant une fréquence de modulation et une phase de commande,
- des moyens d'émission d'un faisceau lumineux commandés électriquement par lesdits moyens de commande électrique de sorte que ledit faisceau lumineux présente une puissance optique modulée sinusoïdalement à ladite fréquence de modulation du signal de commande, ledit faisceau lumineux se propageant selon un premier chemin de propagation jusqu'à ladite couche de matériau,
- des moyens de détection photo-thermiques adaptés à détecter un flux de chaleur rayonnée par ladite couche de matériau chauffée par ledit faisceau lumineux et délivrant un signal de mesure qui est représentatif dudit flux de chaleur rayonnée par ladite couche de matériau, ledit flux de chaleur rayonnée se propageant selon un deuxième chemin de propagation jusqu'aux moyens de détection photo-thermiques,
- des moyens de filtrage numérique adaptés à extraire dudit signal de mesure une composante sinusoïdale modulée à ladite fréquence de modulation du signal de commande pour déterminer une phase de mesure de cette composante sinusoïdale dudit signal de mesure, et
- des moyens de calcul programmés pour calculer, pour ladite fréquence de modulation du signal de commande, un déphasage entre une composante sinusoïdale dudit flux de chaleur rayonnée et ladite puissance optique modulée du faisceau lumineux,

et pour déterminer l'épaisseur de ladite couche de matériau en fonction du déphasage entre ladite composante sinusoïdale dudit flux de chaleur rayonnée et ladite puissance optique modulée du faisceau lumineux.

Elle concerne également un ensemble de mesure simultanée de l'épaisseur de chaque couche de matériau d'une pluralité de couches de matériaux chacune disposée à l'intérieur d'un cylindre d'une pluralité de cylindres d'un moteur.

ARRIERE-PLAN TECHNOLOGIQUE

Les carters-cylindres (ou blocs-moteurs) en fonte, présents par exemple dans les moteurs de véhicules automobiles, sont aujourd'hui souvent remplacés par des carters-cylindres en aluminium, les alésages (ou cylindres) des carters-cylindres pouvant alors être recouverts d'un revêtement en acier déposé projection thermique ou par électrochimie (connue aussi sous l'appellation *« Bore Spray Coating »* selon l'expression d'origine anglo-saxonne utilisée). Un procédé de préparation d'un alésage de cylindre pour effectuer un traitement par projection thermique est par exemple connu du document FR2873946.

Cependant, pour assurer la durabilité des moteurs, l'épaisseur du revêtement en acier doit être supérieure à un seuil, par exemple de l'ordre de 10 micromètres (en particulier après l'étape de finition des cylindres par rodage). L'épaisseur de ce revêtement doit donc pouvoir être contrôlée régulièrement, en particulier pour détecter des dérives dans le processus de fabrication.

Actuellement, l'épaisseur du revêtement en acier est contrôlée en laboratoire par une analyse destructive. Cette analyse est longue et onéreuse et elle ne permet de plus pas de réaliser un contrôle qualité efficace (puisque l'analyse ne permet pas de détecter une anomalie dans le processus de fabrication et de la corriger en temps réel). On connaît du document US2007/086000 un dispositif optique d'inspection de surfaces à partir de l'analyse d'un faisceau lumineux réfléchi par la surface étudiée.

On connait de la demande de brevet FR1356404 une méthode de radiométrie thermique laser permettant la détermination de l'épaisseur d'une couche de matériau déposée sur un substrat. Dans cette méthode, un faisceau lumineux est émis de manière à chauffer la couche de matériau étudiée, générant alors un flux de chaleur rayonnée. L'étude de ce flux de chaleur rayonnée permet de déduire l'épaisseur de la couche de matériau. Cette méthode présente alors les avantages d'être non destructive et sans contact, tout en fournissant rapidement une mesure de l'épaisseur.

Cependant, le dispositif décrit dans la demande de brevet FR1356404 est particulièrement encombrant et ne permet pas une mesure à l'intérieur des cylindres d'un moteur.

OBJET DE L'INVENTION

Afin de remédier aux inconvénients précités de l'état de la technique, la présente invention propose un dispositif de mesure d'épaisseur dont l'encombrement est réduit, de manière à pouvoir effectuer des mesures sur des surfaces de pièces mécaniques qui sont en vis-à-vis de parties intérieures de ces pièces mécaniques, comme par exemple les cylindres d'un carter-cylindres d'un moteur automobile.

Plus particulièrement, on propose selon l'invention un dispositif de mesure pour déterminer l'épaisseur d'une couche d'un matériau conforme à la revendication 1.

Ainsi grâce à l'invention et à la présence de l'élément de déviation, le faisceau lumineux permettant de chauffer la couche de matériau et le flux de chaleur rayonnée par la couche de matériau sont superposés dans une partie du dispositif qui présente alors un encombrement réduit. L'agencement des éléments présents dans cette partie du dispositif est en effet plus compact. La réduction de l'encombrement d'une partie du dispositif de mesure peut alors permettre de l'introduire à l'intérieur d'un cylindre d'un moteur pour une mesure de l'épaisseur d'un revêtement interne de ce cylindre.

D'autres caractéristiques non limitatives et avantageuses du dispositif de mesure conforme à l'invention, prises individuellement ou selon toutes les combinaisons techniquement possibles, sont énoncées dans les revendications 2 à 9 et la suivante :

- l'orifice traversant peut être laissé ouvert ou être comblé par des moyens d'obturation transparents à la longueur d'onde du faisceau lumineux.

L'invention concerne également une utilisation du dispositif de mesure décrit précédemment conforme à la revendication 10.

L'invention propose également un ensemble de mesure simultanée de l'épaisseur de chaque couche de matériau d'une pluralité de couches de matériaux conforme à la revendication 11.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 est une vue schématique d'un dispositif de mesure conforme à l'invention ;
- la figure 2 est une vue schématique d'une tête de mesure déportée conforme à l'invention ;
- la figure 3 est un diagramme schématique illustrant un procédé de mesure selon l'invention ;
- la figure 4 représente les courbes du signal de commande, de la puissance optique modulée et de la composante sinusoïdale du flux de chaleur rayonnée ; et
- la figure 5 représente la courbe théorique du déphasage entre la composante sinusoïdale du flux de chaleur rayonnée et la puissance optique modulée du faisceau lumineux en fonction de la fréquence de modulation obtenue après ajustement des paramètres de mesure.

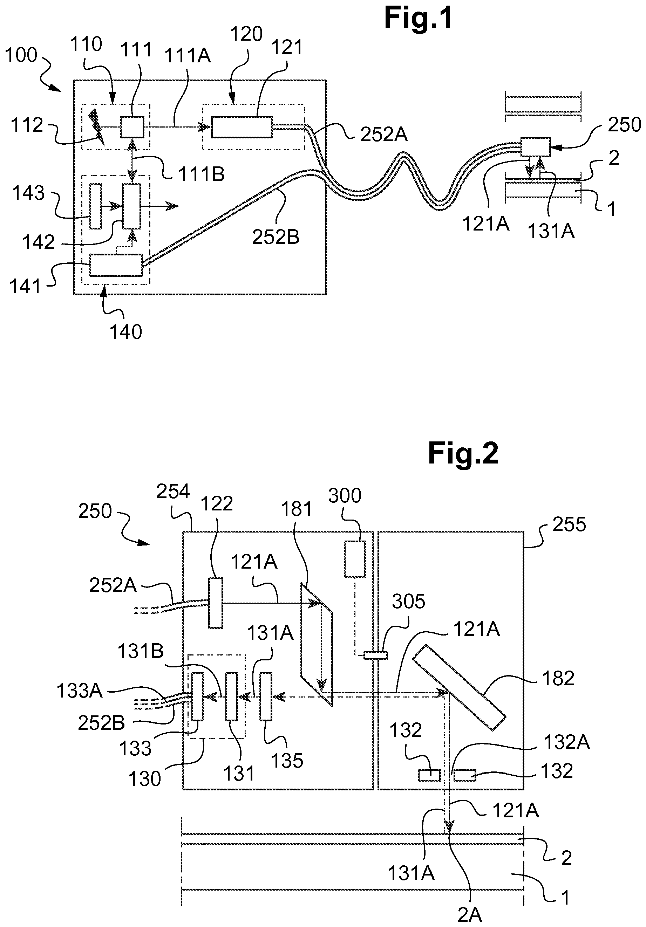

Sur la figure 1, on a représenté un mode de réalisation d'un dispositif de mesure 100 destiné à mesurer l'épaisseur d'une couche 2 d'un matériau.

Dans le mode de réalisation représenté sur la figure 1, la couche 2 de matériau recouvre un substrat 1.

En variante, il est possible d'utiliser le dispositif de mesure 100 de l'invention afin de mesurer l'épaisseur d'une couche de matériau qui serait seule, sous la forme d'une plaque ou d'un film mince. On entend ici par plaque ou film mince, une plaque ou un film présentant une épaisseur très inférieure à sa longueur et à sa largeur.

Dans l'exemple détaillé ici, la couche 2 de matériau est, par exemple, une couche d'acier déposée sur le substrat 1 métallique en aluminium. Le substrat 1 peut notamment être constitué par la paroi d'un cylindre dans un carter-cylindres d'un moteur d'un véhicule automobile. La couche 2 est par exemple déposée sur la face interne de ce cylindre.

Comme représenté sur la figure 1, le dispositif de mesure 100 comporte :

- des moyens de commande électrique 110 adaptés à délivrer un signal de commande 11 sinusoïdal ayant une fréquence de modulation $f_m$ et une phase de commande $\phi_{com}$,
- des moyens d'émission 120 d'un faisceau lumineux 121A commandés électriquement par lesdits moyens de commande électrique 110,

- des moyens de détection photo-thermiques 130 adaptés à détecter un flux de chaleur rayonnée 131A par ladite couche 2 de matériau chauffée par ledit faisceau lumineux 121A et délivrant un signal de mesure 133A qui est représentatif dudit flux de chaleur rayonnée 131A par ladite couche 2 de matériau,
- des moyens de filtrage numérique 141,
- des moyens de calcul 142.

Les moyens de commande électrique 110 délivrent un signal de commande 111A.

Les moyens de commande électrique 110 comprennent ici une source d'alimentation électrique 112 reliée à un générateur de courant 111 basse fréquence (voir figure 1). Ce générateur de courant 111 basse fréquence comprend ici une source de tension sinusoïdale basse fréquence et un régulateur de courant qui convertit les variations de tension sinusoïdales en des variations de courant.

Ainsi, le générateur de courant 111 génère, en fonction d'une consigne de fréquence, un courant électrique dont l'intensité, exprimée en ampère (symbole A), est modulée au cours du temps.

Plus particulièrement ici, le générateur de courant 111 génère, en fonction du temps t, un courant sinusoïdal à une fréquence de modulation $f_m$.

Le courant sinusoïdal généré par le générateur de courant 111 forme un signal de commande délivré par les moyens de commande électrique 110.

De manière générale, ce signal de commande, noté par la suite $i_{com}(t)$, peut s'écrire sous la forme suivante : $i_{com}(t) = i_0 * \cos(2*\pi*f_m*t + \phi_{com})$, où $i_0$ et $\phi_{com}$ représentent respectivement l'amplitude de commande, exprimée en ampère (A), et la phase de commande, exprimée en radians (rad), du signal de commande.

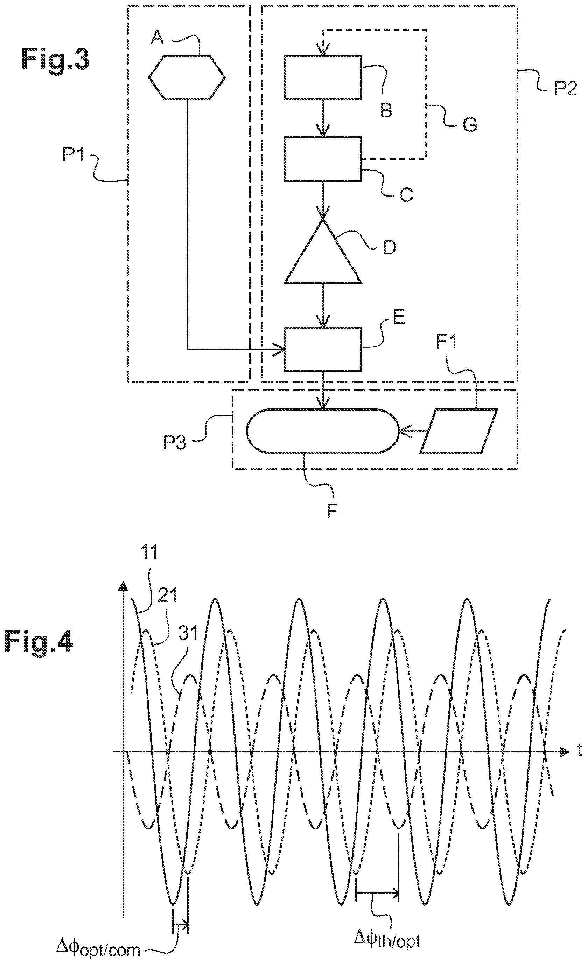

On a représenté sur la figure 4 un exemple d'une courbe 11 représentative du signal de commande en fonction du temps, pour une fréquence de modulation $f_m$ de 1000 Hz, une amplitude de commande égale à 1 ampère, et une phase de commande $\phi_{com}$ égale à 0 radian.

Les moyens d'émission 120 comportent une source lumineuse 121 qui est ici une diode laser.

La diode laser utilisée ici est une diode qui émet de la lumière à une longueur d'onde d'émission $\lambda_L$. La longueur d'onde $\lambda_L$ est comprise entre 100 et 1800 nanomètres (nm). La diode laser présente une fréquence comprise entre 1 et 10000 Hertz (Hz). La diode laser présente une puissance optique maximale $P_{max}$ comprise entre 1 et 500 Watt (W).

En variante, la source lumineuse des moyens d'émission 120 peut être par exemple un laser, tel qu'un laser à gaz, un laser solide ou un laser à fibre dopée.

Commandés par les moyens de commande électrique 110, la diode laser émet un faisceau lumineux 121A à la longueur d'onde d'émission $\lambda_L$.

Le diamètre du faisceau lumineux 121A (aussi appelé «diamètre du spot ») est défini comme le diamètre de la surface qui se trouve à l'intersection entre le faisceau lumineux 121A et un plan tangent à la surface extérieure d'une pièce revêtue à mesurer (ici le substrat 1 et la couche 2 de matériau). Le diamètre du faisceau lumineux 121A est compris entre 1500 et 20000 micromètres ($\mu m$).

La durée d'excitation correspond à la durée pendant laquelle le faisceau lumineux 121A échauffe la couche 2 de matériau pour la réalisation d'une mesure en un point. Cette durée d'excitation ne conditionne pas la faisabilité de la mesure. Sa valeur est à fixer sur la base d'un compromis entre la précision recherchée et la durée acceptable nécessaire pour chaque mesure individuelle (en particulier dans le cas d'une cadence industrielle).

Dans le mode de réalisation représenté sur la figure 1, la diode laser est directement pilotée en courant par le générateur de courant 111 qui délivre le signal de commande 111A.

Ainsi commandé, le faisceau lumineux 121A émis par la diode laser présente, en fonction du temps t, une puissance optique $P_{opt}(t)$, exprimée en watt (W), qui est modulée sinusoïdalement à la fréquence de modulation $f_m$ du signal de commande 111A.

De manière générale, la puissance optique $P_{opt}(t)$ du faisceau lumineux 121A émis par la source lumineuse 121 peut s'écrire sous la forme : $P_{opt}(t) = P_0 * \cos(2*\pi*f_m*t + \phi_{opt})$, où $P_0$ et $\phi_{opt}$ représentent respectivement la puissance optique modulée maximale, exprimée en watt, et la phase du faisceau lumineux 121A, exprimée en radians (rad). Cette phase $\phi_{opt}$ du faisceau lumineux 121A sera appelée par la suite « phase optique ».

On a représenté sur la figure 4, par la courbe référencée 21, un exemple de la puissance optique $P_{opt}(t)$ modulée du faisceau lumineux 121A en fonction du temps t.

On observe sur cette figure 4 que la courbe représentative 21 de la puissance optique $P_{opt}(t)$ modulée et la courbe représentative 11 du signal de commande $i_{com}(t)$ présentent, entre elles, pour la fréquence de modulation $f_m$, un décalage temporel.

Dans la suite, on désignera respectivement par les références 11 et 21 le signal de commande et la puissance optique modulée en général.

Ce décalage temporel est dû au temps de réponse de la source lumineuse 121 qui, commandée électriquement par le générateur de courant 111, ne réagit pas instantanément au signal de commande 111A pour émettre le faisceau lumineux 121A.

En d'autres termes, la puissance optique $P_{opt}(t)$ modulée et le signal de commande $i_{com}(t)$ sont, à la fréquence de modulation $f_m$, déphasés l'un par rapport à l'autre : ces deux grandeurs physiques présentent, entre elles, un déphasage $\Delta\phi_{opt/com}$.

Ce déphasage $\Delta\phi_{opt/com}$ est égal à la différence entre la phase optique $\phi_{opt}$ de la puissance optique 21 modulée et la phase de commande $\phi_{com}$ du signal de commande 11 (voir figure 4), soit $\Delta\phi_{opt/com} = \phi_{opt} - \phi_{com}$.

On verra dans la suite de la description que, lors d'une étape de calibration d'un procédé de mesure selon l'invention, un déphasage de calibration $\Delta\phi_{cal}$ est déterminé, à la fréquence de modulation $f_m$, ce déphasage de calibration $\Delta\phi_{cal}$ étant fonction du déphasage $\Delta\phi_{opt/com}$ entre la puissance optique $P_{opt}$ modulée du faisceau lumineux 121A et le signal de commande 11.

Les moyens d'émission 120 sont adaptés à irradier la couche 2 de matériau avec le faisceau lumineux 121A qui est incident sur cette couche 2 de matériau en un point de chauffage 2A (voir figure 1).

Avantageusement, ici, les moyens d'émission 120 sont disposés à distance de la couche 2 de matériau. En pratique, par exemple, ils sont disposés à distance des cylindres à tester.

Cela est également le cas, de préférence, desdits moyens de commande électrique 110, ainsi que des moyens de filtrage numérique 141 et de calcul 142.

Dans l'exemple représenté ici, le dispositif de mesure 100 comprend avantageusement une tête de mesure déportée 250 qui présente des dimensions réduites. Cette tête de mesure 250 déportée est disposée à distance desdits moyens d'émission 120.

En particulier, cette tête de mesure 250 est adaptée à être introduite à l'intérieur du cylindre du moteur pour réaliser une mesure de l'épaisseur d'une couche d'un matériau déposé à l'intérieur du cylindre. Cette distance peut être utilisée dans la plupart des cylindres de carters-cylindres en raison de l'encombrement de la tête de mesure 250, afin notamment de pouvoir pénétrer à l'intérieur de ces cylindres.

Selon une utilisation du dispositif de mesure 100, la tête de mesure 250 est positionnée de manière à ce que la distance entre la sortie du faisceau lumineux 121A de la tête de mesure 250 et la couche 2 de matériau est inférieure à 4 centimètres (cm).

Cette tête de mesure 250 comprend notamment un corps logeant différent composants optiques et mécaniques du dispositif de mesure 100.

Cette tête de mesure déportée 250 est reliée aux moyens d'émission 120 au moyen d'une première fibre optique 252A. L'acheminement du faisceau lumineux 121A émis par lesdits moyens d'émission 120 vers la tête de mesure 250 se fait par l'intermédiaire de cette première fibre optique 252A.

La première fibre optique 252A est connectée en sortie de la diode laser de sorte que le faisceau lumineux 121A émis par la diode laser est couplé à l'intérieur de la première fibre optique 252A pour être transporté jusqu'à la tête de mesure déportée 250 (voir figure 1).

La première fibre optique 252A débouche à l'intérieur du corps de la tête de mesure 250.

La figure 2 représente la tête de mesure 250 et les différents composants qu'elle comprend.

La tête de mesure déportée 250 comprend tout d'abord des moyens optiques de collimation 122 destinés à collimater le faisceau lumineux 121A à sa sortie de la première fibre optique 252A.

En effet, le faisceau lumineux 121A émis par la diode laser présente, en sortie de la première fibre optique 252A un angle d'ouverture élevé, par exemple compris entre 10° et 40°.

Les moyens optiques de collimation 122 sont ici formés d'un doublet de lentilles corrigées des aberrations optiques dans la gamme de longueur d'onde d'émission de la diode laser.

En variante, les moyens optiques de collimation 122 peuvent comprendre par exemple une lentille asphérique.

Grâce à l'insertion des moyens optiques de collimation 122 sur le trajet du faisceau lumineux 121A, celui-ci présente alors une divergence angulaire plus faible, typiquement inférieure à 5°. Ainsi, le faisceau lumineux 121A est plus fin, c'est-à-dire que son rayon $r_0$ à 1/e, exprimé en mètre (m) ou millimètre (mm), est petit, par exemple compris entre 0,5 mm et 3 mm.

De cette façon, la quantité surfacique d'énergie déposée par le faisceau lumineux 121A absorbé par la couche 2 de matériau est plus importante, et l'élévation de température au point de chauffage 2A localisé est plus importante.

Le faisceau lumineux 121A de divergence angulaire plus faible se propage dans la tête de mesure 250 selon un premier chemin de propagation. Ce premier chemin de propagation s'étend des moyens de collimation 122 à la couche 2 de matériau.

Dans cette description, on entend par « chemin de propagation » la zone de l'espace dans laquelle se propage un signal entre une région d'émission et une région de réception prédéfinies de ce signal. Par exemple, le premier chemin de propagation correspond au parcours emprunté par le faisceau lumineux 121A.

De manière remarquable, comme représenté sur la figure 2, le dispositif de mesure 100 comprend également un élément de déviation 181 du faisceau lumineux 121A. L'élément de déviation 181 est agencé pour dévier le faisceau lumineux 121A.

Plus précisément, l'élément de déviation 181 est ici agencé pour dévier le faisceau lumineux 121A se propageant hors de la fibre optique. Cet élément de déviation 181 est différent d'une fibre optique.

Plus précisément, cet élément de déviation 181 est disposé dans la tête de mesure 250, et est agencé pour dévier le faisceau lumineux 121A en sortie desdits moyens optiques de collimation 122.

Par déviation du faisceau lumineux 121A, on entend ici un changement d'axe de propagation du faisceau lumineux 121A. En dehors de toute fibre optique ou autre élément optique, le faisceau lumineux se propage globalement en ligne droite, selon un axe de propagation avec une direction et un sens de propagation.

L'élément de déviation 181 introduit au moins un changement de direction dans le premier chemin de propagation du faisceau lumineux 121A.

En pratique, ici, l'élément de déviation 181 introduit deux changements de direction dans le premier chemin de propagation du faisceau lumineux 121A, de telle sorte que l'axe de propagation du faisceau lumineux 121A est décalé par le passage à travers cet élément de déviation 181 : l'axe de propagation du faisceau lumineux 121A en sortie de l'élément de déviation 181 s'étend parallèlement à l'axe de propagation du faisceau lumineux 121A en entrée de cet élément de déviation 181. La direction et le sens de propagation ne sont pas modifiés par l'élément de déviation 181. Seule la position de l'axe de propagation est ici modifiée.

Ainsi, l'élément de déviation 181 introduit un décalage entre une première partie du premier chemin de propagation du faisceau lumineux 121A, s'étendant en amont de l'élément de déviation 181, donc correspondant au chemin du faisceau lumineux 121A incident sur l'élément de déviation 181 et une deuxième partie du premier chemin de propagation, s'étendant en aval de l'élément de déviation 181, donc correspondant au chemin du faisceau lumineux 121A sortant de l'élément de déviation 181.

La première partie du chemin de propagation du faisceau lumineux 121A s'étend ici entre les moyens optiques de collimation 122 et l'élément de déviation 181.

Comme représenté sur la figure 2, les première et deuxième parties du premier chemin de propagation du faisceau lumineux 121A sont ici parallèles.

En variante, on peut envisager que la direction de propagation du faisceau lumineux 121A soit modifiée par le passage dans l'élément de déviation 181.

Afin de permettre cette déviation, l'élément de déviation 181 comprend au moins une surface réfléchissante qui réfléchit la longueur d'onde $\lambda_L$ du faisceau lumineux 121A, et de préférence au moins deux surfaces réfléchissantes qui réfléchissent la longueur d'onde $\lambda_L$ du faisceau lumineux 121A.

En pratique, l'élément de déviation 181 est un prisme rhomboédrique dont les surfaces internes réfléchissent la longueur d'onde $\lambda_L$ du faisceau lumineux 121A.

En variante, l'élément de déviation 181 peut être formé par l'association en parallèle de deux miroirs plans disposés parallèlement l'un par rapport à l'autre. Dans ce cas, les surfaces réfléchissantes des miroirs sont traitées afin de réfléchir la longueur d'onde $\lambda_L$ du faisceau lumineux 121A.

Comme cela est représenté sur la figure 2, la tête de mesure 250 comprend également un élément réfléchissant 182. L'élément réfléchissant 182 est agencé pour réfléchir le faisceau lumineux 121A de manière à induire un changement de direction dans le premier chemin de propagation du faisceau lumineux 121A.

L'élément réfléchissant 182 est disposé sur le trajet du faisceau lumineux 121A en sortie de l'élément de déviation 181.

La deuxième partie du premier chemin de propagation du faisceau lumineux 121A s'étend alors entre la sortie de l'élément de déviation 181 et l'élément réfléchissant 182.

Une troisième partie de ce premier chemin de propagation du faisceau lumineux 121A s'étend entre l'élément réfléchissant 182 et la couche 2 de matériau.

L'élément réfléchissant 182 permet alors d'orienter le premier chemin de propagation du faisceau lumineux 121A de manière à ce que la deuxième partie et la troisième partie de ce premier chemin de propagation du faisceau lumineux 121A forment un angle non nul entre elles.

En pratique, cet angle peut être compris entre 45° et 100°. Il peut approcher une valeur de 180° selon le besoin. Par exemple, dans le cas de la mesure de l'épaisseur du revêtement à l'intérieur d'un cylindre d'un moteur, de forme cylindrique, l'angle est typiquement de 90°.

Dans l'exemple décrit ici, le faisceau lumineux 121A entre dans la tête de mesure 250 selon une direction d'entrée sensiblement parallèle à l'axe du cylindre à tester. Ainsi, grâce à la configuration de l'élément de déviation 181 et de l'élément réfléchissant 182 dans la tête de mesure 250 précédemment décrite, le faisceau lumineux 121A sort de la tête de mesure 250 en formant cet angle avec la direction d'entrée.

Avantageusement, ici, le faisceau lumineux 121A est incident sur la couche 2 avec un angle d'incidence de 90°.

Comme représenté sur la figure 2, l'élément réfléchissant 182 permet alors d'orienter le faisceau lumineux 121A vers la couche 2 de matériau. En pratique, l'élément réfléchissant 182 est un miroir plan réfléchissant la longueur d'onde $\lambda_L$ du faisceau lumineux 121A.

L'irradiation de la couche 2 de matériau par le faisceau lumineux 121A a pour effet de chauffer la couche 2 de matériau au niveau du point de chauffage 2A et autour de celui-ci, par suite de l'absorption du faisceau lumineux 121A et de l'échauffement de la couche 2 de matériau.

Par suite de cet échauffement, la température de la couche 2 de matériau au niveau du point de chauffage 2A va varier et la couche 2 de matériau, chauffée localement, va alors émettre un flux de chaleur rayonnée 131A (voir figures 1 et 2) par rayonnement thermique dans tout l'espace.

Ce flux de chaleur rayonnée 131A, exprimé en Watt (W), est lié à la température locale atteinte par la couche 2 de matériau, en particulier au point de chauffage 2A.

De manière générale, étant donnée la température locale atteinte, le flux de chaleur rayonnée 131A est émis dans le domaine des longueurs d'onde de l'infra-rouge.

La puissance optique 21 du faisceau lumineux 121A étant modulée, la fraction de la puissance optique absorbée par la couche 2 de matériau varie également dans le temps de sorte que le chauffage localisé de cette couche 2 de matériau au niveau du point de chauffage 2A oscille également en fonction du temps.

En conséquence, la température de la couche 2 de matériau au point de chauffage 2A présente également des oscillations dans le temps, à la même fréquence de modulation que celle du faisceau lumineux 121A.

Ainsi, le flux de chaleur rayonnée 131A par la couche 2 de matériau varie en fonction du temps. C'est grâce à la mesure des variations de ce flux de chaleur rayonnée 131A par le dispositif de mesure 100 qu'il est possible de déterminer l'épaisseur de la couche 2 de matériau.

Comme représenté sur les figures 1 et 2, le flux de chaleur rayonnée 131A par la couche 2 de matériau se propage vers et dans la tête de mesure 250 selon un deuxième chemin de propagation.

Le deuxième chemin de propagation correspond au parcours emprunté par le flux de chaleur 131A entre la couche 2 de matériau et lesdits moyens de détection photo-thermiques 130.

La tête de mesure 250 comporte des moyens optiques de collection 132. Ces moyens optiques de collection 132 sont positionnés entre la couche 2 de matériau et l'élément réfléchissant 182 sur le trajet du flux de chaleur rayonnée 131A. Les moyens optiques de collection sont agencés pour collecter le flux de chaleur rayonnée 131A et le focaliser sur l'élément réfléchissant 182.

Les moyens optiques de collection 132 comprennent ici un orifice traversant 132A. Cet orifice traversant 132A permet le passage du faisceau lumineux 121A lors de la propagation du faisceau lumineux 121A de l'élément réfléchissant 182 vers la couche 2 de matériau.

En variante (non représentée), l'orifice traversant 132A peut être comblé par des moyens d'obturation transparents au moins pour la longueur d'onde $\lambda_L$ du faisceau lumineux 121A. Cela permet notamment de protéger la tête de mesure 250 des intrusions de poussière, d'humidité ou d'autres corps étrangers.

L'orifice traversant 132A peut par exemple être comblé avec une lentille convergente permettant de focaliser le faisceau lumineux 121A afin d'obtenir un diamètre de faisceau lumineux 121A de très petite taille, par exemple compris entre 0,1 et 1 millimètres (mm).

Selon une autre variante, l'orifice traversant 132A peut être comblé par une lentille divergente. Cela permet alors d'obtenir un diamètre du faisceau lumineux 121A plus grand sur la surface de la couche 2 de matériau, avec un diamètre par exemple compris entre 1 et 15 mm.

Selon une autre variante encore, l'orifice traversant 132A peut être comblé par un hublot transmettant au moins la longueur d'onde $\lambda_L$ du faisceau lumineux 121A. Ce hublot peut par exemple être formé de fluorure de calcium ($CaF_2$).

Etant donnée l'incidence du faisceau lumineux 121A sur la couche 2 de matériau selon un angle de 90°, une grande partie du flux de chaleur rayonnée 131A rayonne en direction de la tête de mesure 250, selon une direction orientée à 90° de la couche 2 de matériau.

En outre, les moyens optiques de collection 132 sont de préférence centrés sur la troisième partie du premier chemin de propagation du faisceau lumineux 121A.

Ainsi, la direction globale du flux de chaleur rayonnée 131A émis par la couche 2 de matériau et acheminé jusqu'à l'élément réfléchissant 182 est ici identique à la direction d'incidence du faisceau lumineux 121A sur la couche 2 de matériau. Les axes de propagation du flux de chaleur rayonnée 131A et du faisceau lumineux 121A correspondant sont confondus.

En d'autres termes, ici la troisième partie du premier chemin de propagation du faisceau lumineux 121A est superposée à une première partie du deuxième chemin de propagation du flux de chaleur rayonnée 131A, qui s'étend entre la couche 2 de matériau et l'élément réfléchissant 182.

L'élément réfléchissant 182 est également agencé pour réfléchir le flux de chaleur rayonnée 131A. En pratique, la surface réfléchissante de l'élément réfléchissant 182 est donc traitée pour réfléchir le faisceau lumineux 121A et le flux de chaleur rayonnée 131A.

Une deuxième partie du deuxième chemin de propagation du flux de chaleur rayonnée 131A s'étend entre l'élément réfléchissant 182 et l'élément de déviation 181.

L'élément réfléchissant 182 permet alors d'orienter le deuxième chemin de propagation du flux de chaleur rayonnée 131A de manière à ce que la première partie et la deuxième partie de ce deuxième chemin de propagation du flux de chaleur rayonnée 131A forment un angle non nul entre elles. Cet angle est évidemment identique à celui introduit par l'élément réfléchissant 182 entre la deuxième et la troisième partie du premier chemin de propagation du faisceau lumineux 121A.

En pratique, comme mentionné précédemment, cet angle peut être compris entre 45° et 100° (voire dans certains cas être légèrement inférieur à 180°). Par exemple, dans le cas de la mesure de l'épaisseur du revêtement à l'intérieur d'un cylindre d'un moteur, l'angle est typiquement de 90°.

Ainsi, la deuxième partie du deuxième chemin de propagation du flux de chaleur rayonnée 131A et la deuxième partie du premier chemin de propagation du faisceau lumineux 121A sont également superposées.

Comme cela est représenté sur la figure 2, le flux de chaleur rayonnée 131A se propage ensuite en direction de l'élément de déviation 181. Cet élément de déviation 181 est agencé pour propager sans déviation le flux de chaleur rayonnée 131A selon le deuxième chemin de propagation du flux de chaleur rayonnée 131A. En pratique, les surfaces de l'élément de déviation 181 réfléchissent le faisceau lumineux 121A mais pas le flux de chaleur rayonnée 131A. La direction de propagation du flux de chaleur rayonnée 131A n'est donc pas modifiée par le passage à travers l'élément de déviation 181.

La présence de l'élément de déviation 181 permet de superposer le premier chemin de propagation du faisceau lumineux 121A et le deuxième chemin de propagation du flux de chaleur rayonnée 131A entre l'élément de déviation 181 et la couche 2 de matériau. La tête de mesure 250 est en conséquence plus compacte.

Plus précisément, ici le premier chemin de propagation du faisceau lumineux 121A et le deuxième chemin de propagation du flux de chaleur rayonnée 131A sont entièrement superposés entre l'élément de déviation 181 et la couche 2 de matériau.

En aval de l'élément de déviation 181, c'est-à-dire à la sortie du flux de chaleur rayonnée 131A de cet élément de déviation 181, le deuxième chemin de propagation du flux de chaleur rayonnée 131A comprend une troisième partie qui s'étend jusqu'aux moyens de détection photo-thermiques 130 de la tête de mesure 250.

Un filtre optique 135, également compris dans la tête de mesure 250, est placé sur le trajet du flux de chaleur rayonnée 131A le long de cette troisième partie du deuxième chemin de propagation du flux de chaleur rayonnée 131A. Le filtre optique 135 est placé entre l'élément de déviation 181 et les moyens de détection photo-thermiques 130.

Ces moyens de détection photo-thermiques 130 sont adaptés à détecter le flux de chaleur rayonnée 131A par la couche 2 de matériau chauffée par le faisceau lumineux 121A.

En particulier ici, ces moyens de détection photo-thermiques 130 comprennent un détecteur photo-thermique 131 infra-rouge pour recueillir le flux de chaleur rayonnée 131A par la couche 2 de matériau.

Le filtre optique 135 est conçu de manière à présenter une transmission lumineuse faible pour des longueurs d'onde proches de la longueur d'onde d'émission $\lambda_L$ de la source lumineuse 121.

Un tel filtre optique 135 peut être par exemple un filtre en germanium, présentant une densité optique supérieure ou égale à 10, de préférence supérieure ou égale à 20.

Ce filtre optique 135 permet d'empêcher l'illumination du détecteur photo-thermique 131 par un faisceau lumineux réfléchi (non représenté) sur la surface de la couche 2 de matériau.

Au contraire, le filtre optique 135 présente une transmission lumineuse élevée dans le domaine infra-rouge de manière à transmettre une partie importante du flux de chaleur rayonnée 131A vers le détecteur photo-thermique 131.

Après transmission par le filtre optique 135, le flux de chaleur rayonnée 131A est collecté par le détecteur photo-thermique 131 compris dans les moyens de détection photo-thermiques 130. D'autres moyens optiques de focalisation (non représentés) permettent en pratique de focaliser le flux de chaleur rayonnée 131A. Ces autres moyens de focalisation sont par exemple de type lentille en germanium.

Ces moyens de détection photo-thermiques 130 peuvent alors détecter le flux de chaleur rayonnée 131A.

Le détecteur photo-thermique 131 peut être par exemple un mono-détecteur infra-rouge tel qu'une cellule en séléniure de plomb, un capteur refroidi de type C.I.D., c'est-à-dire *« Charge-Injection Device »* en anglais, en antimoniure d'indium ou un capteur refroidi de tellurure de mercure-cadmium.

Le détecteur photo-thermique 131 génère un signal électrique analogique 131B (voir figure 2) qui est fonction du flux de chaleur rayonnée 131A par le point de chauffage localisé 2A de la couche 2 de matériau irradiée par le faisceau lumineux 121A.

Les moyens de détection 130 comportent également un convertisseur analogique/numérique 133 auquel le signal analogique 131B est transmis.

Ce convertisseur analogique/numérique 133 délivre alors un signal de mesure 133A (voir figure 2), qui est un signal numérique et qui est représentatif du flux de chaleur rayonnée 131A par la couche 2 de matériau.

Comme représenté sur la figure 1, le dispositif de mesure 100 comporte par ailleurs une unité électronique et informatique 140, ci-après désignée par l'acronyme UEI. Cette UEI 140 est située à distance de la tête de mesure 250.

La tête de mesure 250 est reliée à cette UEI 140 au moyen d'une deuxième fibre optique 252B. Le signal de mesure 133A représentatif du flux de chaleur rayonnée 131A est acheminé depuis les moyens de détection photo-thermiques 130 jusqu'à l'UEI 140 par l'intermédiaire de cette deuxième fibre optique 252B.

En variante, la deuxième fibre optique 252B peut être remplacée par un câble de transport du signal de mesure 133A.

Grâce à la présence de la tête de mesure 250, reliée aux moyens d'émission 120 et à l'UEI 140 par un faisceau 252 de fibres optiques constitué de la première fibre optique 252A et de la deuxième fibre optique 252B, les moyens d'émission 120 et l'UEI 140 peuvent être disposés à distance de la couche 2 de matériau dont l'épaisseur doit être déterminée.

Ceci est particulièrement avantageux, dans le cas où cette couche 2 de matériau se trouve à l'intérieur de systèmes semi-fermés dont les dimensions sont réduites.

En utilisant des fibres optiques (et/ou un câble) de longueur adaptable, par exemple de longueur supérieure à plusieurs mètres, voire plusieurs dizaines de mètres, il est alors possible d'effectuer la mesure malgré un espace disponible plutôt exigu. Cette configuration est par exemple parfaitement adaptée à la mesure de l'épaisseur du revêtement intérieur d'un cylindre d'un carter-cylindres d'un moteur, dont le diamètre est de l'ordre de quelques centimètres.

De plus, comme visible sur la figure 2, la tête de mesure 250 comporte de préférence deux parties, une première partie 254 et une deuxième partie 255.

La deuxième partie 255 est mobile en rotation par rapport à la première partie 254. La tête de mesure 250 comprend en effet un dispositif de mise en mouvement 300 agencé pour mettre en rotation la deuxième partie 255. Le dispositif de mise en mouvement 300 comporte à cet effet un moteur. La rotation s'effectue autour d'un axe de rotation 305 sensiblement parallèle à la première partie du premier chemin de propagation du faisceau lumineux 121A.

La première partie 254 de la tête de mesure 250 comprend au moins l'élément de déviation 181. D'après l'exemple représenté sur la figure 2, la première partie 254 de la tête de mesure 250 comprend également les moyens optiques de collimation 122, le filtre optique 135 et les moyens de détection photo-thermiques 130.

La deuxième partie 255 de la tête de mesure 250 comprend quant à elle au moins l'élément réfléchissant 182. Dans l'exemple représenté sur la figure 2, la deuxième partie 255 de la tête de mesure 250 comprend également les moyens optiques de collection 132.

La rotation de l'élément réfléchissant 182 permet un balayage de l'intérieur d'une surface dont on souhaite connaître l'épaisseur de revêtement sans avoir besoin d'effectuer de nouveaux réglages. Dans le cas de cylindre d'un moteur, la rotation de la deuxième partie 255 autour de son axe de rotation 305 permet de balayer l'intérieur du cylindre afin d'effectuer simplement et rapidement la mesure de l'épaisseur du revêtement intérieur de ce cylindre à différents endroits de la circonférence d'une section de ce cylindre.

En variante, on peut également envisager de munir le dispositif de mesure 100 d'un système de déplacement de la tête de mesure 250 dans son ensemble, selon une direction parallèle à l'axe de rotation 305 de la deuxième partie 255 de la tête de mesure 250. La tête de mesure 250 est alors adaptée à être déplacée en translation le long de l'axe de rotation 305, ce qui permet de contrôler facilement et rapidement l'épaisseur de la couche 2 de matériau à différentes hauteurs le long de l'axe du cylindre.

En variante, les moyens de détection photo-thermiques 130 peuvent être placés à l'extérieur de la tête de mesure 250. Dans ce cas, la deuxième fibre optique 252B permet l'acheminement du flux de chaleur rayonnée 131A de la tête déportée 250 vers les moyens de détection photo-thermiques 130. Cela permet de réduire encore l'encombrement de la tête de mesure 250.

Comme représenté sur la figure 1, l'UEI 140 précédemment introduite comprend tout d'abord des moyens de filtrage numérique 141 qui reçoivent en entrée le signal de mesure 133A numérisé par le convertisseur analogique/numérique 133 des moyens de détection 130.

Comme expliqué précédemment, le flux de chaleur rayonnée 131A par la couche 2 de matériau présente des oscillations liées aux variations de température de la couche 2 de matériau absorbant le faisceau lumineux 121A dont la puissance optique 21 est modulée en fonction du temps (voir figure 4).

On a représenté sur la figure 4, un exemple d'une courbe représentative 31 d'une composante sinusoïdale du flux de chaleur rayonnée 131A en fonction du temps.

Le signal de mesure 133A, qui est fonction du flux de chaleur rayonnée 131A par la couche 2 de matériau, comprend également une composante sinusoïdale modulée à la fréquence de modulation $f_m$.

Cette composante sinusoïdale du signal de mesure 133A est déphasée par rapport à la courbe représentative 11 du signal de commande. On appellera phase de mesure $\phi_{mes}$, la phase de cette composante sinusoïdale du signal de mesure 133A.

Comme le signal de mesure 133A est représentatif du flux de chaleur rayonnée 131A par la couche 2 de matériau détecté par le photo-détecteur 131, cette phase de mesure $\phi_{mes}$ est la somme d'une phase « thermique » $\phi_{th}$ qui correspond à la composante sinusoïdale 31 du flux de chaleur rayonnée 131A et d'une phase interne $\phi_{int}$ du photo-détecteur 131 et de l'électronique de la chaîne d'acquisition, soit encore $\phi_{mes} = \phi_{th} + \phi_{int}$.

Dans la suite, on désignera par la référence 31A la composante sinusoïdale du signal de mesure 133A en général.

Les moyens de filtrage numérique 141 de l'UEI 140 sont programmés afin d'extraire la composante sinusoïdale 31A du signal de mesure 133A et déterminer la phase de mesure $\phi_{mes}$ de cette composante sinusoïdale 31A, à la fréquence de modulation $f_m$ du signal de commande 11.

Plus précisément, les moyens de filtrage numérique 141 effectuent ici les opérations classiques suivantes :

i) calcul de la transformée de Fourier du signal de mesure 133A,

ii) extraction, dans le domaine de Fourier, de la composante sinusoïdale 31A du signal de mesure 133A par application d'un filtre passe-bande très étroit et très sélectif, par exemple de largeur 10 hertz autour de la fréquence de modulation $f_m$.

En variante, la phase de mesure peut être déterminée en calculant après l'opération ii) précédente, la transformée de Fourier inverse de la transformée de Fourier du signal de mesure filtrée puis en déterminant la phase de mesure directement par comparaison avec le signal de commande 11.

En variante encore, les moyens de filtrage numérique calculent la corrélation croisée, aussi appelée covariance croisée, entre le signal de mesure et le signal de commande qui va permettre d'extraire, dans le domaine de Fourier, un pic de ressemblance entre ces deux signaux. Ce pic de ressemblance aura une expression complexe dont l'argument sera le déphasage entre les deux signaux.

L'UEI 140 comporte également des moyens de calcul 142 qui séparent la partie réelle et la partie imaginaire de la composante sinusoïdale 31A pour déterminer la phase de mesure $\phi_{mes}$.

Plus précisément, ces moyens de calcul 142 séparent la partie réelle et la partie imaginaire de la transformée de Fourier inverse de la transformée de Fourier de la composante sinusoïdale 31A du signal de mesure 133A, cette dernière transformée de Fourier étant une fonction complexe.

Ensuite, les moyens de calcul 142 calculent, pour la fréquence de modulation $f_m$ du signal de commande 11, un déphasage $\Delta\phi_{th/opt}$ entre la composante sinusoïdale 31 du flux de chaleur rayonnée 131A et la puissance optique 21 modulée du faisceau lumineux 121A.

Pour cela, les moyens de calcul 142 sont reliés :

- aux moyens de filtrage numérique 141 qui transmettent aux moyens de calcul 142 la phase de mesure $\phi_{mes}$ obtenue après filtrage numérique du signal de mesure 133A,
- au générateur de courant 111 qui transmet, *via* la liaison 111B, aux moyens de calcul 141 la phase de commande $\phi_{com}$ du signal de commande 11, et
- à des moyens de mémorisation 143 dans lesquels ont été préalablement enregistré le déphasage de calibration $\Delta\phi_{cal}$ déterminé, à la fréquence de modulation $f_m$, lors de l'étape de calibration du procédé de mesure selon l'invention.

Les moyens de calcul 142 sont programmés pour calculer le déphasage $\Delta\phi_{th/opt}$ entre la composante sinusoïdale 31 du flux de chaleur rayonnée 131A et la puissance optique 21 modulée du faisceau lumineux 121A, à partir :

- d'un déphasage de mesure $\Delta\phi_{mes}$ entre la phase de mesure $\phi_{mes}$ et la phase de commande $\phi_{com}$, ce déphasage de mesure $\Delta\phi_{mes}$ étant donc tel que : $\Delta\phi_{mes} = \phi_{mes} - \phi_{com}$, et
- du déphasage de calibration $\Delta\phi_{cal}$ préalablement enregistré dans les moyens de mémorisation 143.

Les moyens de calcul 142 sont également programmés pour déterminer l'épaisseur de la couche 2 de matériau en fonction du déphasage $\Delta\phi_{th/opt}$ entre la composante sinusoïdale 31 du flux de chaleur rayonnée 131A par la couche 2 de matériau et la puissance optique 21 modulée du faisceau lumineux 121A.

On verra dans la suite de la description comment ces moyens de mesure sont utilisés dans le procédé de mesure selon l'invention afin d'effectuer cette détermination.

Dans le mode de réalisation du dispositif de mesure 100 représenté sur les figures 1 et 2, l'UEI 140 peut également commander les moyens de commande 110 grâce à la liaison 111B pour ajuster la fréquence de modulation $f_m$ du générateur de courant 111.

De manière avantageuse, le dispositif de mesure 100 peut être intégré à un ensemble de mesure simultanée de l'épaisseur de chaque couche d'une pluralité de couches de matériau, chaque couche de matériau étant disposée à l'intérieur d'un cylindre d'une pluralité de cylindres d'un moteur.

Dans cet ensemble de mesure :

- lesdits moyens d'émission sont adaptés à émettre une pluralité de faisceaux lumineux commandés électriquement par lesdits moyens de commande électrique de sorte que chaque faisceau lumineux présente une puissance optique modulée sinusoïdalement à ladite fréquence de modulation $f_m$ du signal de commande, chaque faisceau lumineux se propageant selon un premier chemin de propagation jusqu'à l'une desdites couches associée à ce faisceau lumineux,

- les moyens de détection photo-thermiques sont adaptés à détecter le flux de chaleur rayonnée par chaque couche de matériau chauffée par le faisceau lumineux auquel cette couche de matériau est associée, et à délivrer une pluralité de signaux de mesure, chaque signal de mesure étant représentatif du flux de chaleur rayonnée par ladite couche de matériau correspondante, chaque flux de chaleur rayonnée se propageant selon un deuxième chemin de propagation jusqu'aux moyens de détection photo-thermiques,
- il est prévu une pluralité d'éléments de déviation, chaque élément de déviation étant agencés pour dévier l'un des faisceaux lumineux de la pluralité de faisceau lumineux de manière à ce que le premier chemin de propagation de chaque faisceau lumineux soit superposé avec le deuxième chemin de propagation du flux de chaleur rayonnée correspondant entre l'élément de déviation déviant ce faisceau lumineux et la couche de matériau associée à ce faisceau lumineux,
- les moyens de filtrage numérique sont adaptés à extraire de chaque signal de mesure sa composante sinusoïdale modulée à ladite fréquence de modulation $f_m$ du signal de commande pour déterminer la phase de mesure $\phi_{mes}$ de cette composante sinusoïdale, et
- les moyens de calcul sont programmés pour calculer, pour ladite fréquence de modulation $f_m$ du signal de commande, le déphasage $\Delta\phi_{th/opt}$ entre ladite composante sinusoïdale du flux de chaleur rayonnée par chaque couche de matériau et ladite puissance optique modulée du faisceau lumineux auquel cette couche de matériau est associée,

et pour déterminer l'épaisseur de chaque couche de matériau en fonction du déphasage $\Delta\phi_{th/opt}$ entre ladite composante sinusoïdale dudit flux de chaleur rayonnée par cette couche de matériau et ladite puissance optique modulée du faisceau lumineux auquel est associée cette couche de matériau.

Les cylindres de ladite pluralité de cylindres peuvent par exemple être alignés.

L'ensemble de mesure comprend par exemple une pluralité de moyens de commande et une pluralité de moyens d'émission tels que décrits précédemment. Chaque moyen de commande est associé à un moyen d'émission. Cela permet de générer ladite pluralité de faisceaux lumineux. En pratique, sont générés autant de faisceaux lumineux qu'il y a de cylindres dans le moteur. On prévoit donc de préférence autant de moyens de commande et de moyens d'émission qu'il y a de cylindres à contrôler simultanément.

L'ensemble de mesure comprend également autant de têtes de mesure telles que décrites précédemment qu'il y a de cylindres à contrôler afin de permettre une mesure d'épaisseur simultanée dans tous les cylindres. Chaque tête de mesure reçoit un seul faisceau lumineux provenant de l'un des moyens d'émission de ladite pluralité de moyens d'émission.

Chaque tête de mesure déportée génère ensuite un signal de mesure correspondant à la mesure effectuée dans le cylindre correspondant. Une pluralité de signaux de mesure est donc générée. En pratique, il y a donc autant de signaux de mesure générés que de cylindres compris dans le moteur.

L'ensemble de mesure comprend en outre de préférence une unique UEI permettant l'analyse de l'ensemble des signaux de mesure générés pour tous les cylindres et donc la détermination simultanée de l'épaisseur de revêtement à l'intérieur de chacun des cylindres du carter-cylindres du moteur.

On va désormais décrire, en référence à la figure 3, le procédé de mesure de l'épaisseur de la couche 2 de matériau selon l'invention qui utilise le dispositif de mesure 100 représenté sur les figures 1 et 2.

Dans l'exemple décrit ici, on utilise un ensemble de vingt-deux fréquences de modulation, référencées respectivement $f_{m,1}$, $f_{m,2}$, ... jusqu'à $f_{m,22}$, ces fréquences de modulation $f_{m,1}$, $f_{m,2}$, ..., $f_{m,22}$ étant toutes différentes les unes des autres.

Selon ce mode de réalisation particulier, le procédé de mesure comporte ici trois périodes successives :

- une première période P1 (voir figure 3) qui comprend la calibration (bloc A de la figure 3) des moyens d'émission 120 par rapport aux moyens de commande électrique 110 à chacune des fréquences de modulation $f_{m,1}$, $f_{m,2}$, ..., $f_{m,22}$ utilisées,
- une deuxième période P2 (voir figure 3) qui comprend, pour chaque fréquence de modulation $f_{m,1}$, $f_{m,2}$, ..., $f_{m,22}$ :

  - une étape de chauffage (bloc B de la figure 3) de la couche 2 au moyen du faisceau lumineux 121A,
  - une étape de détection (bloc C de la figure 3) du flux de chaleur rayonnée 131A grâce au détecteur photo-thermique 131,
  - une étape de filtrage numérique (bloc D de la figure 3) du signal de mesure 133A grâce à l'UEI 140, et
  - une étape de calcul du déphasage de mesure $\Delta\phi_{mes}$ (bloc E de la figure 3) grâce à l'UEI 140, et

- une troisième période P3 (voir figure 3) qui comprend la détermination (bloc F de la figure 3) de l'épaisseur de la couche 2 de matériau grâce à l'UEI 140.

On va décrire ci-après ces différentes phases.

Première période P1

Lors de cette première période P1, on réalise, pour chaque fréquence de modulation $f_{m,1}$, $f_{m,2}$, ..., $f_{m,22}$, une étape de calibration (voir bloc A de la figure 3) des moyens d'émission 120 pour déterminer grâce aux moyens de détection photo-thermiques 130, aux fréquences de modulation $f_{m,1}$, $f_{m,2}$, ..., $f_{m,22}$ considérée, les déphasages de calibration $\Delta\phi_{cal,1}$, $\Delta\phi_{cal,2}$, ..., $\Delta\phi_{cal,22}$ entre la puissance optique 21 modulée et le signal de commande 11 (voir figure 4).

Cette étape de calibration peut être simplement réalisée avec le dispositif de mesure 100 représenté sur les figures 1 et 2 en utilisant un miroir plan positionné et orienté en lieu et place de la couche 2 de matériau et du substrat 1 et en prenant soin d'ôter le filtre optique 135 à chaque fois afin de mesurer le faisceau lumineux réfléchi par le miroir grâce aux moyens de détection photo-thermiques 130.

Dans cette configuration, le signal de mesure 133A délivré par les moyens de détection 130 est sinusoïdal et aucun filtrage numérique de ce signal de mesure 133A n'est nécessaire. L'UEI 140 détermine alors, pour chaque fréquence de modulation $f_{m,1}$, $f_{m,2}$, ..., $f_{m,22}$, les déphasages de calibration $\Delta\phi_{cal,1}$, $\Delta\phi_{cal,2}$, ..., $\Delta\phi_{cal,22}$ entre la diode laser et le générateur de courant 111 et l'enregistre dans les moyens de mémorisation 143 de l'UEI 140.

Ce déphasage de calibration $\Delta\phi_{cal}$, mesuré grâce au photo-détecteur 131, est fonction du déphasage $\Delta\phi_{opt/com}$ entre la puissance optique 21 modulée et le signal de commande 11. Plus précisément ici, le déphasage de calibration $\Delta\phi_{cal}$ comprend un biais systématique lié à la phase interne $\phi_{int}$ du photo-détecteur 131 de sorte que le déphasage de calibration $\Delta\phi_{cal}$ est la somme du déphasage $\Delta\phi_{opt/com}$ et de la phase interne $\phi_{int}$ du photo-détecteur 131 et de l'électronique de la chaîne d'acquisition. On a ainsi les relations suivantes :

$$\Delta\phi_{cal} = \Delta\phi_{opt/com} + \phi_{int} = (\phi_{opt} - \phi_{com}) + \phi_{int} = (\phi_{opt} + \phi_{int}) - \phi_{com}$$

À la fin de la première période P1, les différents déphasages de calibration $\Delta\phi_{cal,1}$, $\Delta\phi_{cal,2}$, ..., $\Delta\phi_{cal,22}$ déterminés respectivement pour l'ensemble des vingt-deux fréquences de modulation $f_{m,1}$, $f_{m,2}$, ..., $f_{m,22}$, sont déterminés et enregistrés dans les moyens de mémorisation 143 de l'UEI 140.

De préférence, cette première phase est réalisée préalablement aux deuxième et troisième phases P2, P3.

Deuxième période P2

La deuxième période P2 du procédé de mesure débute avec une étape de chauffage (bloc B de la figure 3) de la couche 2 de matériau grâce à l'irradiation de la couche 2 avec le faisceau lumineux 121A issu des moyens d'émission 120 du dispositif de mesure 100 (voir figures 1 et 2).

Une première étape de chauffage est par exemple réalisée pour une première fréquence de modulation $f_{m,1}$.

Vient ensuite une première étape de détection (bloc C de la figure 3), grâce aux moyens de détection photo-thermiques 130, du flux de chaleur rayonnée 131A par la couche 2 chauffée au moyen du faisceau lumineux 121A dont la puissance optique 21 est donc modulée sinusoïdalement à la première fréquence de modulation $f_{m,1}$.

Le flux de chaleur rayonnée 131A est collecté par le détecteur photo-thermique 131, et les moyens de détection 130 délivrent alors un premier signal de mesure 133A qui est représentatif du flux de chaleur rayonnée 131A par la couche 2 de matériau.

Lors d'une première étape de filtrage numérique (bloc C de la figure 3), ce premier signal de mesure 133A est ensuite filtré numériquement par les moyens de filtrage numérique 141 de l'UEI 140 de manière à en extraire une première composante sinusoïdale 31A modulée à la première fréquence de modulation $f_{m,1}$.

Cette première composante sinusoïdale 31A est alors transmise aux moyens de calcul 142 de l'UEI 140 qui déterminent une première phase de mesure $\phi_{mes,1}$ de cette première composante sinusoïdale 31A.

Enfin, lors d'une première étape de calcul (bloc E de la figure 3), les moyens de calcul 142 calculent, pour la première fréquence de modulation $f_{m,1}$, un premier déphasage $\Delta\phi_{th/opt,1}$ entre la première composante sinusoïdale 31 du flux de chaleur rayonnée 131A et la puissance optique 21 modulée du faisceau lumineux 121A.

Ce premier déphasage $\Delta\phi_{th/opt,1}$ est calculé à partir du premier déphasage de mesure $\Delta\phi_{mes,1}$ entre la première phase de mesure $\phi_{mes,1}$ de la première composante sinusoïdale 31A et la première phase de commande $\phi_{com,1}$ du signal de commande 11, et du premier déphasage de calibration $\Delta\phi_{cal,1}$ préalablement déterminé lors de la première étape de calibration de la première période P1 (voir flèche en trait plein entre le bloc A et le bloc E sur la figure 3).

On a en particulier les relations suivantes :

$\Delta\phi_{th/opt,1} = \Delta\phi_{mes,1} - \Delta\phi_{cal,1}$, avec $\Delta\phi_{mes,1} = \phi_{mes} - \phi_{com}$ et $\Delta\phi_{cal,1} = (\phi_{opt} + \phi_{int}) - \phi_{com}$,
donc, $\Delta\phi_{th/opt,1} = (\phi_{mes} - \phi_{com}) - [(\phi_{opt} + \phi_{int}) - \phi_{com}]$
soit $\Delta\phi_{th/opt,1} = [(\phi_{th} + \phi_{int}) - \phi_{com}] - [(\phi_{opt} + \phi_{int}) - \phi_{com}]$, qui peut s'écrire :

$$\Delta\phi_{th/opt,1} = (\phi_{th}+\phi_{int}) - (\phi_{opt} + \phi_{int}).$$

Cela nous donne finalement : $\Delta\phi_{th/opt,1} = \phi_{th} - \phi_{opt}$.

Ainsi, en utilisant les moyens de détection photo-thermiques 130 à la fois pour l'étape de calibration et pour l'étape de détection, il est possible de s'affranchir, quelle que soit la fréquence de modulation $f_m$ du signal de commande 11, de la phase interne du détecteur photo-thermique 131 et d'obtenir, grâce au procédé de mesure selon l'invention, une mesure très précise du déphasage $\Delta\phi_{th/opt}$ entre le flux de chaleur rayonnée 131A et le faisceau lumineux 121A.

Selon l'exemple décrit ici du procédé de mesure, on utilise vingt-deux fréquences de modulation.

Cependant, le procédé de mesure selon l'invention peut être mis en oeuvre pour une seule fréquence de modulation du signal de commande, ou pour tout nombre de fréquences de modulation supérieur ou égal à un.

La précision du procédé de mesure est améliorée lorsque plusieurs fréquences de modulation sont utilisées.

Lors de la deuxième période P2, on répète les étapes de calibration, de chauffage, et de détection pour chacune des autres fréquences de modulation $f_{m,2}$, ..., $f_{m,22}$.

Lors des autres étapes de calcul, on calcule également, pour ces autres fréquences de modulation $f_{m,2}$, ..., $f_{m,22}$, des autres déphasages $\Delta\phi_{th/opt,2}$, ..., $\Delta\phi_{th/opt,22}$ entre les autres composantes sinusoïdales aux autres fréquences de modulation $f_{m,2}$, ..., $f_{m,22}$ du flux de chaleur rayonnée 131A et la puissance optique 21 modulée du faisceau lumineux 121A à ces autres fréquences de modulation $f_{m,2}$, ..., $f_{m,22}$.

De manière avantageuse, pour deux fréquences de modulation particulières étudiées successivement $f_m$ et $f'_m$, les étapes de chauffage (bloc B de la figure 3) et de détection (bloc C de la figure 3) réalisées pour la fréquence de modulation $f'_m$ étudiée ultérieurement sont exécutées en parallèle avec les étapes de filtrage numérique (bloc D de la figure 3) et de calcul (bloc E de la figure 3) réalisées pour la fréquence de modulation $f_m$ étudiée juste avant (voir flèche G en trait pointillé entre le bloc C et le bloc B sur la figure 3).

De cette façon, la durée de la deuxième période P2 est réduite et on obtient plus rapidement l'ensemble des déphasages $\Delta\phi_{th/opt,1}$, $\Delta\phi_{th/opt,2}$, ..., $\Delta\phi_{th/opt,22}$ calculés pour chacune des fréquences de modulation $f_{m,1}$, $f_{m,2}$, ..., $f_{m,22}$.

Ainsi, à l'issue de la deuxième période P2, on dispose d'un ensemble de valeurs expérimentales des déphasages $\Delta\phi_{th/opt,1}$, $\Delta\phi_{th/opt,2}$, ..., $\Delta\phi_{th/opt,22}$ mesurés, aux différentes fréquences de modulation $f_{m,1}$, $f_{m,2}$, ..., $f_{m,22}$, entre la composante sinusoïdale 31 du flux de chaleur rayonnée 131A et la puissance optique 21 modulée du faisceau lumineux 121A.

Troisième période P3

Lors de la troisième période P3, on réalise une étape de détermination (bloc F de la figure 3) de l'épaisseur de la couche 2 de matériau en fonction des déphasages $\Delta\phi_{th/opt,1}$, $\Delta\phi_{th/opt,2}$, ..., $\Delta\phi_{th/opt,22}$ calculés pour chacune des fréquences de modulation $f_{m,1}$, $f_{m,2}$, ..., $f_{m,22}$ entre la composante sinusoïdale 31 du flux de chaleur rayonnée 131A par la couche 2 et la puissance optique 21 modulée du faisceau lumineux 121A.

À cet effet, il est possible de procéder à l'aide d'une régression statistique sur les valeurs expérimentales des déphasages $\Delta\phi_{th/opt,1}$, $\Delta\phi_{th/opt,2}$, ..., $\Delta\phi_{th/opt,22}$ mesurés.

Plus précisément, on réalise un ajustement de courbe, en comparant les valeurs expérimentales des déphasages $\Delta\phi_{th/opt,1}$, $\Delta\phi_{th/opt,2}$, ..., $\Delta\phi_{th/opt,22}$ calculés lors de la deuxième période P2 avec des valeurs théoriques obtenues au moyen d'une courbe théorique représentative du déphasage théorique $\Delta\phi_{th/opt,theo}$ entre la composante sinusoïdale 31 et la puissance optique 21 modulée en fonction de la fréquence de modulation.

En effet, on montre que, à une fréquence de modulation $f_m$ particulière, le déphasage théorique $\Delta\phi_{th/opt,theo}$ s'exprime, en fonction de l'épaisseur d de la couche 2 de matériau, par exemple selon la relation mathématique (relation R1) suivante :

$$\Delta\varphi_{th/opt}(f_m)$$
$$= \arg\left(\int_0^{+\infty} \frac{\frac{1}{2}x \times \exp\left(-\frac{x^2}{4}\right)}{\kappa_1^2 - \alpha_c^2}\right.$$
$$\times \left\{\frac{e^{-\kappa_1 d}}{\kappa_1 D}\left[(e^{-\alpha_c d} - e^{-\kappa_1 d})(1 + k_s\kappa_2 R_{cont}) + \left(e^{-\kappa_1 d} - \frac{\kappa_1}{\alpha_c}e^{-\alpha_c d}\right)\frac{k_s\kappa_2}{k_c\kappa_1}\right]\right.$$
$$\left.\left. + \left(1 - \frac{\alpha_c}{\kappa_1}\right)\right\} dx\right)$$

où $D = \left(1 + e^{-2\kappa_1 d}\right)\frac{k_s\kappa_2}{k_c\kappa_1} + (1 - k_s\kappa_2 R_{cont})$, et

$$\kappa_1 = \sqrt{x^2/r_0^2 - 2\pi i f \rho_c C_c/k_c} \quad \text{et} \quad \kappa_2 = \sqrt{x^2/r_0^2 - 2\pi i f \rho_s C_s/k_s}$$

Dans la formule précédente interviennent les différentes constantes physiques dépendant des matériaux ainsi que des paramètres géométriques. En particulier :

- $\rho_c C_c$ et $\rho_s C_s$ sont respectivement les capacités calorifiques volumiques, exprimées en Joule par Kelvin et par mètre-cube ($J.K^{-1}.m^3$) de la couche 2 et du substrat 1,
- $k_c$ et $k_s$ sont respectivement les conductivités thermiques, exprimées en Watt par mètre et par Kelvin ($W.m^{-1}.K^{-1}$), de la couche 2 et du substrat 1,
- d est l'épaisseur, exprimée en mètre (m) de la couche 2 de matériau,
- $r_0$ est le rayon à 1/e, exprimé en mètre, du faisceau lumineux 121A laser (e est une constante égale à $e^1 = exp(1)$, *exp* étant la fonction exponentielle),
- $R_{cont}$ est la résistance thermique, exprimée en mètre-carré Kelvin par Watt ($m^2.K.W^{-1}$) à l'interface entre la couche 2 de matériau et le substrat 1, et
- $\alpha_c$ est le coefficient d'absorption par mètre ($m^{-1}$) de la couche 2 de matériau à la longueur d'onde d'émission $\lambda_L$ du faisceau lumineux 121A émis par la source lumineuse 121.

Ainsi, la courbe représentative du déphasage théorique $\Delta\phi_{th/opt,theo}$ dépend, d'une part, de l'épaisseur d de la couche 2 de matériau, et, d'autre part, de ces constantes physiques (bloc F1 de la figure 3), l'épaisseur d et ces constantes physiques étant prises comme paramètres d'ajustement pour l'ajustement de courbe.

En d'autres termes, lors de l'étape de détermination (bloc F de la figure 3), on ajuste, en fonction de ces paramètres d'ajustement, la courbe représentative du déphasage théorique $\Delta\phi_{th/opt,theo}$ entre la puissance optique 21 modulée et la composante sinusoïdale 31 en fonction de la fréquence de modulation, prenant en compte lesdits déphasages $\Delta\phi_{th/opt}$, $\Delta\phi'_{th/opt}$ calculés pour lesdites fréquences de modulation $f_m$, $f'_m$ étudiées, de sorte que la courbe représentative du déphasage théorique $\Delta\phi_{th/opt,theo}$ décrive au mieux les valeurs expérimentales des déphasages $\Delta\phi_{th/opt,1}$, $\Delta\phi_{th/opt,2}$, ..., $\Delta\phi_{th/opt,22}$ déterminées.

Une telle régression peut par exemple être réalisée en utilisant un algorithme de Levenberg-Marquardt.

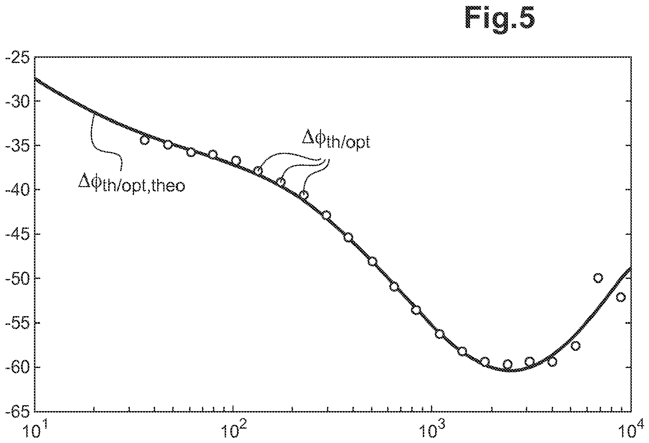

Cet ajustement est illustré à la figure 5, sur laquelle on a représenté :

- en abscisses : la fréquence de modulation $f_m$, exprimée en Hertz (Hz), selon une échelle logarithmique, et
- en ordonnées : le déphasage entre la composante sinusoïdale 31 du flux de chaleur rayonnée 131A et la puissance optique 21 modulée du faisceau lumineux 121A.

On a reporté sur cette figure 5 :

- les vingt-deux valeurs expérimentales du déphasage $\Delta\phi_{th/opt}$ calculées lors de la deuxième période P2, et
- la courbe du déphasage théorique $\Delta\phi_{th/opt,theo}$ entre la composante sinusoïdale 31 du flux de chaleur rayonnée 131A et la puissance optique 21 modulée du faisceau lumineux 121A en fonction de la fréquence de modulation obtenue en utilisant la méthode inverse de type Levenberg-Marquart.

Cette meilleure courbe, au sens de Levenberg-Marquardt, est obtenue pour un ensemble de paramètres d'ajustement.

On détermine alors l'épaisseur d de la couche 2 de matériau comme étant l'un de ces paramètres d'ajustement de cette meilleure courbe théorique représentative ajustée.

Selon une variante, le procédé de mesure est mis en oeuvre en utilisant une seule fréquence de modulation du signal de commande.

L'épaisseur de la couche 2 de matériau est déterminée en fonction du déphasage $\Delta\phi_{th/opt}$ entre la composante sinusoïdale du flux de chaleur rayonnée 131A et la puissance optique 21 modulée du faisceau lumineux en utilisant la même relation R1 que précédemment.

Dans cette relation, on affecte alors aux différentes grandeurs thermo-physiques des valeurs prédéterminées en fonction de la nature du matériau de la couche 2, de la nature du substrat 1 et des conditions expérimentales, telle que la température par exemple.

En variante, il est également possible d'utiliser des échantillons revêtus possédant des couches de revêtement de différentes épaisseurs connues (les mesures ayant été effectuées au préalable par d'autres techniques). Cela permet alors de reconstruire de manière empirique la relation entre le déphasage $\Delta\phi_{th/opt}$ entre la composante sinusoïdale du flux de chaleur rayonnée 131A et la puissance optique 21 modulée du faisceau lumineux 121A et l'épaisseur d de la couche.

Lors de l'affectation, il est possible de fixer une plage de valeurs possibles pour les différentes grandeurs thermo-physiques.

Le dispositif de mesure 100 tel que décrit précédemment permet également de mesurer les défauts présents dans un revêtement, comme par exemple des porosités ou des décohésions de revêtement.

Nous avons décrit ici un mode de réalisation particulièrement avantageux du dispositif de mesure selon l'invention, dans lequel, l'utilisation de l'élément de déviation, permettant de réduire l'encombrement global de ce dispositif de mesure, associée à l'utilisation d'une tête de mesure déportée, permettant de mettre à distance une partie des éléments du dispositif de mesure, autorise la mesure d'épaisseur d'une couche de matériau dans un espace réduit.

Par ailleurs, le dispositif de mesure selon l'invention peut également être mis en oeuvre sans l'utilisation d'une tête de mesure déportée. Les différents éléments décrits sont conservés, seules les fibres optiques (et/ou le câble) reliant la tête de mesure au reste du dispositif de mesure sont retirées pour mettre en oeuvre cet autre mode de réalisation.

## Revendications

1. Dispositif de mesure (100) pour déterminer l'épaisseur (d) d'une couche (2) d'un matériau comportant :

   - des moyens de commande électrique (110) adaptés à délivrer un signal de commande (11) sinusoïdal ayant une fréquence de modulation $f_m$ et une phase de commande $\phi_{com}$,
   - des moyens d'émission (120) d'un faisceau lumineux (121A) commandés électriquement par lesdits moyens de commande électrique (110) de sorte que ledit faisceau lumineux (121A) présente une puissance optique (21) modulée sinusoïdalement à ladite fréquence de modulation $f_m$ du signal de commande (11), ledit faisceau lumineux (121A) se propageant selon un premier chemin de propagation jusqu'à ladite couche (2) de matériau,
   - des moyens de détection photo-thermiques (130) adaptés à détecter un flux de chaleur rayonnée (131A) par ladite couche (2) de matériau chauffée par ledit faisceau lumineux (121A) et délivrant un signal de mesure (133A) qui est représentatif dudit flux de chaleur rayonnée (131A) par ladite couche (2) de matériau, ledit flux de chaleur rayonnée (131A) se propageant selon un deuxième chemin de propagation jusqu'aux moyens de détection photo-thermiques (130),
   - des moyens de filtrage numérique (141) adaptés à extraire dudit signal de mesure (133A) une composante sinusoïdale (31A) modulée à ladite fréquence de modulation $f_m$ du signal de commande (11) pour déterminer une phase de mesure $\phi_{mes}$ de cette composante sinusoïdale (31A) dudit signal de mesure (133A), et
   - des moyens de calcul (142) programmés pour calculer, pour ladite fréquence de modulation $f_m$ du signal de commande (11), un déphasage $\Delta\phi_{th/opt}$ entre une composante sinusoïdale (31) dudit flux de chaleur rayonnée (131A) et ladite puissance optique (21) modulée du faisceau lumineux (121A), et pour déterminer l'épaisseur (d) de ladite couche (2) de matériau en fonction du déphasage $\Delta\phi_{th/opt}$ entre ladite composante sinusoïdale (31) dudit flux de chaleur rayonnée (131A) et ladite puissance optique (21) modulée du faisceau lumineux (121A),

   **caractérisé en ce que** ledit dispositif de mesure (100) comporte également un élément de déviation (181) du faisceau lumineux (121A) agencé pour dévier ledit faisceau lumineux (121A) de manière à ce que le premier chemin de propagation du faisceau lumineux (121A) soit superposé avec le deuxième chemin de propagation du flux de chaleur rayonnée (131A), entre ledit élément de déviation (181) et ladite couche (2) de matériau, et **en ce que** ledit dispositif de mesure (100) comprend une tête de mesure (250) déportée munie de deux parties (254, 255), dont une partie mobile (255) en rotation par rapport à l'autre partie (254), la partie mobile (255) logeant au moins un élément réfléchissant (182) et l'autre partie (254) de la tête de mesure (250) logeant l'élément de déviation (181), ledit élément réfléchissant (182) étant agencé pour réfléchir le faisceau lumineux (121A) de manière à ce qu'une première partie du premier chemin de propagation dudit faisceau lumineux (121A), qui s'étend de l'élément de déviation (181) à l'élément réfléchissant (182), et une deuxième partie du premier chemin de propagation dudit faisceau lumineux (121A), qui s'étend de l'élément réfléchissant (182) à la couche (2) de matériau, forment un angle non nul.

2. Dispositif de mesure (100) selon la revendication 1, dans lequel les moyens d'émission (120) comprennent une source lumineuse dont la longueur d'onde est comprise entre 100 et 1800 nanomètres, dont la fréquence est comprise entre 1 et 10000 Hertz, dont la puissance optique est comprise entre 1 et 500 Watt et dans lequel le diamètre du faisceau lumineux (121A) est compris entre 1500 et 20000 micromètres.

3. Dispositif de mesure (100) selon la revendication 2, dans lequel l'élément de déviation (181) est agencé pour propager sans déviation le flux de chaleur rayonnée (131A) jusqu'aux moyens de détection photo-thermiques (130) selon le deuxième chemin de propagation.

4. Dispositif de mesure (100) selon l'une des revendications 1 à 3, dans lequel l'élément de déviation (181) comprend un prisme rhomboédrique ou une association d'au moins deux miroirs plans disposés parallèlement l'un par rapport à l'autre.

5. Dispositif de mesure (100) selon l'une des revendications 1 à 4, dans lequel l'élément réfléchissant (182) est également agencé pour réfléchir le flux de chaleur rayonnée (131A) de manière à ce qu'une première partie du deuxième chemin de propagation du flux de chaleur rayonnée (131A), qui s'étend de la couche (2) de matériau à l'élément réfléchissant (182), est superposée à ladite deuxième partie du premier chemin de propagation du faisceau lumineux (121A) et de manière à ce qu'une deuxième partie du deuxième chemin de propagation du flux de chaleur rayonnée (131A), qui s'étend de l'élément réfléchissant (182) à l'élément de déviation (181), est superposée à ladite première partie du premier chemin de propagation du faisceau lumineux (121A).

6. Dispositif de mesure (100) selon l'une des revendications 1 à 5, comportant également des moyens optiques de collection (132) agencés pour focaliser le flux de chaleur rayonnée (131A) sur l'élément réfléchissant (182), lesdits moyens optiques de collection (132) étant positionnés entre l'élément réfléchissant (182) et la couche (2) de matériau.

7. Dispositif de mesure (100) selon la revendication 6, dans lequel les moyens optiques de collection (132) comprennent au moins un orifice traversant (132A) autorisant le passage du faisceau lumineux (121A).

8. Dispositif de mesure (100) selon l'une des revendications 1 à 7, dans lequel la partie mobile (255) de la tête de mesure (250) est mobile en rotation autour d'un axe sensiblement parallèle à la première partie du premier chemin de propagation du faisceau lumineux (121A).

9. Dispositif de mesure (100) selon l'une des revendications 1 à 8, dans lequel la tête de mesure (250) comprend également un dispositif de mise en mouvement (300) agencé pour mettre en rotation la partie mobile (255) de la tête de mesure (250) par rapport à l'autre partie (254) de la tête de mesure (250).

10. Utilisation du dispositif de mesure (100) selon l'une des revendications 1 à 9, selon laquelle la tête de mesure (250) est positionnée de manière à ce que la distance entre la sortie du faisceau lumineux (121A) de la tête de mesure (250) et la couche (2) de matériau est inférieure à 4 centimètres.

11. Ensemble de mesure simultanée de l'épaisseur de chaque couche de matériau d'une pluralité de couches de matériaux, chaque couche de matériau étant disposée à l'intérieur d'un cylindre d'une pluralité de cylindres d'un moteur, comprenant un dispositif de mesure selon l'une des revendications 1 à 9, dans lequel :

- lesdits moyens d'émission sont adaptés à émettre une pluralité de faisceaux lumineux commandés électriquement par lesdits moyens de commande électrique de sorte que chaque faisceau lumineux présente une puissance optique modulée sinusoïdalement à ladite fréquence de modulation $f_m$ du signal de commande, chaque faisceau lumineux se propageant selon un premier chemin de propagation jusqu'à l'une desdites couches associée à ce faisceau lumineux,
- les moyens de détection photo-thermiques sont adaptés à détecter le flux de chaleur rayonnée par chaque couche de matériau chauffée par le faisceau lumineux auquel cette couche de matériau est associée, et à délivrer une pluralité de signaux de mesure, chaque signal de mesure étant représentatif du flux de chaleur rayonnée par ladite couche de matériau correspondante, chaque flux de chaleur rayonnée se propageant selon un deuxième chemin de propagation jusqu'aux moyens de détection photo-thermiques,
- il est prévu une pluralité d'éléments de déviation, chaque élément de déviation étant agencés pour dévier l'un des faisceaux lumineux de la pluralité de faisceaux lumineux de manière à ce que le premier chemin de propagation de chaque faisceau lumineux soit superposé avec le deuxième chemin de propagation du flux de chaleur rayonnée correspondant entre l'élément de déviation déviant ce faisceau lumineux et la couche de matériau associée à ce faisceau lumineux,
- les moyens de filtrage numérique sont adaptés à extraire de chaque signal de mesure sa composante sinusoïdale modulée à ladite fréquence de modulation $f_m$ du signal de commande pour déterminer la phase de mesure $\phi_{mes}$ de cette composante sinusoïdale, et
- les moyens de calcul sont programmés pour calculer, pour ladite fréquence de modulation $f_m$ du signal de commande, le déphasage $\Delta\phi_{th/opt}$ entre ladite composante sinusoïdale du flux de chaleur rayonnée par chaque couche de matériau et ladite puissance optique modulée du faisceau lumineux auquel cette couche de matériau est associée,

et pour déterminer l'épaisseur de chaque couche de matériau en fonction du déphasage $\Delta\phi_{th/opt}$ entre ladite composante sinusoïdale dudit flux de chaleur rayonnée par cette couche de matériau et ladite puissance optique modulée du faisceau lumineux auquel est associée cette couche de matériau.


**Patentansprüche**

1.  Meßvorrichtung (100) zur Bestimmung der Dicke (d) einer Schicht (2) eines Materials mit:

    - elektrischen Steuerungsmitteln (110), die dazu ausgelegt sind, ein sinusförmiges Steuerungssignal (11) mit einer Modulationsfrequenz $f_m$ und einer Steuerungsphase $\Phi_{com}$ abzugeben,
    - Mitteln (120) zum Ausstrahlen eines Lichtstrahls (121A), die durch die elektrischen Steuerungsmittel (110) so gesteuert werden, daß der Lichtstrahl (121A) eine mit der Modulationsfrequenz $f_m$ des Steuerungssignals (11) sinusförmig modulierte optische Leistung (21) aufweist, wobei sich der Lichtstrahl (121A) entlang eines ersten Ausbreitungswegs bis zur Materialschicht (2) ausbreitet,
    - photothermischen Erfassungsmitteln (130), die dazu ausgelegt sind, einen Fluß (131A) von von der durch den Lichtstrahl (121A) erwärmten Materialschicht (2) abgestrahlter Wärme zu erfassen, und die ein Meßsignal (133A) abgeben, das für den Fluß (131A) von von der Materialschicht (2) abgestrahlter Wärme repräsentativ ist, wobei sich der Fluß (131A) abgestrahlter Wärme entlang eines zweiten Ausbreitungswegs bis zu den photothermischen Erfassungsmitteln (130) ausbreitet,
    - digitalen Filtermitteln (141), die dazu ausgelegt sind, aus dem Meßsignal (133A) eine mit der Modulationsfrequenz $f_m$ des Steuerungssignals (11) modulierte sinusförmige Komponente (31A) herauszufiltern, um eine Meßphase $\Phi_{mes}$ dieser sinusförmigen Komponente (31A) des Meßsignals (133A) zu bestimmen, und
    - Rechenmitteln (142), die dazu programmiert sind, für die Modulationsfrequenz $f_m$ des Steuerungssignals (11) eine Phasenverschiebung $\Delta\Phi_{th/opt}$ zwischen einer sinusförmigen Komponente (31) des Flusses (131A) abgestrahlter Wärme und der modulierten optischen Leistung (21) des Lichtstrahls (121A) zu berechnen und

    die Dicke (d) der Materialschicht (2) in Abhängigkeit von der Phasenverschiebung $\Delta\Phi_{th/opt}$ zwischen der sinusförmigen Komponente (31) des Flusses (131A) abgestrahlter Wärme und der modulierten optischen Leistung (21) des Lichtstrahls (121A) zu bestimmen,

    **dadurch gekennzeichnet, daß** die Meßvorrichtung (100) außerdem ein Element (181) zum Umleiten des Lichtstrahls (121A) aufweist, das dazu ausgelegt ist, den Lichtstrahl (121A) so umzulenken, daß der erste Ausbreitungsweg des Lichtstrahls (121A) zwischen dem Umleitungselement (181) und der Materialschicht (2) mit dem zweiten Ausbreitungsweg des Flusses abgestrahlter Wärme (131A) überlagert wird, und daß die Meßvorrichtung (100) einen abgesetzten Meßkopf (250) mit zwei Teilen (254, 255) aufweist, von denen ein Teil (255) gegenüber dem anderen Teil (254) drehbar beweglich ist, wobei der bewegliche Teil (255) mindestens ein reflektierendes Element (182) aufnimmt und der andere Teil (254) des Meßkopfs (250) ein Umleitungsteil (181) aufnimmt, wobei das reflektierende Element (182) dazu angeordnet ist, den Lichtstrahl (121A) so zu reflektieren, daß ein erster Teil des ersten Ausbreitungswegs des Lichtstrahls (181A), der sich vom Umleitungselement (181) bis zum reflektierenden Element (182) erstreckt, und ein zweiter Teil des Ausbreitungswegs des Lichtstrahls (121A), der sich vom reflektierenden Element (182) bis zur Materialschicht (2) erstreckt, einen von Null verschiedenen Winkel bilden.

2.  Meßvorrichtung (100) gemäß Anspruch 1, bei der die Ausstrahlungsmittel (120) eine Lichtquelle aufweisen, deren Wellenlänge zwischen 100 und 1800 Nanometer beträgt, deren Frequenz zwischen 1 und 10000 Hertz beträgt, deren optische Leistung zwischen 1 und 500 Watt beträgt und bei der der Durchmesser des Lichtstrahls (121A) zwischen 1500 und 20000 Mikrometer beträgt.

3.  Meßvorrichtung (100) gemäß Anspruch 2, bei der das Umleitungselement (181) dazu ausgelegt ist, den Fluß abgestrahlter Wärme (131A) ohne Umleitung bis zu den photothermischen Erfassungsmitteln (130) entlang des zweiten Ausbreitungswegs zu leiten.

4.  Meßvorrichtung (100) gemäß einem der Ansprüche 1 bis 3, bei der das Umleitungselement (181) ein rhomboedrisches Prisma oder eine Zusammenstellung von mindestens zwei ebenen, zueinander parallel angeordneten Spiegeln aufweist.

5. Meßvorrichtung (100) gemäß einem der Ansprüche 1 bis 4, bei der das reflektierende Element (182) ebenfalls dazu ausgelegt ist, den Fluß (131A) abgestrahlter Wärme so zu reflektieren, daß ein erster Teil des zweiten Ausbreitungswegs des Flusses (131A) abgestrahlter Wärme, der sich von der Materialschicht (2) bis zum reflektierenden Element (182) erstreckt, mit dem zweiten Teil des ersten Ausbreitungswegs des Lichtstrahls (121) überlagert wird und daß ein zweiter Teil des zweiten Ausbreitungswegs des Flusses abgestrahlter Wärme (131A), der sich vom reflektierenden Element (182) bis zum Umleitungselement (181) erstreckt, mit dem ersten Teil des ersten Ausbreitungswegs des Lichtstrahls (121A) überlagert wird.

6. Meßvorrichtung (100) gemäß einem der Ansprüche 1 bis 5, die außerdem optische Sammelmittel (132) aufweist, die dazu ausgelegt sind, den Fluß abgestrahlter Wärme (131A) auf dem reflektierenden Element (182) zu fokalisieren, wobei die optischen Sammelmittel (132) zwischen dem reflektierenden Element (182) und der Materialschicht (2) angeordnet sind.

7. Meßvorrichtung (100) gemäß Anspruch 6, bei der die optischen Sammelmittel (132) mindestens ein Durchgangsloch (132A) aufweisen, das den Durchgang des Lichtstrahls (121A) ermöglicht.

8. Meßvorrichtung (100) gemäß einem der Ansprüche 1 bis 7, bei der der bewegliche Teil (255) des Meßkopfes (250) um eine zum ersten Teil des ersten Ausbreitungswegs des Lichtstrahls (121A) im Wesentlichen parallele Achse drehbar beweglich ist.

9. Meßvorrichtung (100) gemäß einem der Ansprüche 1 bis 8, bei der der Meßkopf (250) außerdem eine Bewegungsvorrichtung (300) aufweist, die dazu ausgelegt ist, den beweglichen Teil (255) des Meßkopfs (250) gegenüber dem anderen Teil (254) des Meßkopfes (250) in Drehung zu versetzen.

10. Verwendung der Meßvorrichtung (100) gemäß einem der Ansprüche 1 bis 9, gemäß der der Meßkopf (250) so angeordnet ist, daß die Entfernung zwischen dem Ausgang des Lichtstrahls (121A) aus dem Meßkopf (250) und der Materialschicht (2) weniger als 4 Zentimeter beträgt.

11. Meßeinheit zum gleichzeitigen Messen der Dicke jeder Materialschicht einer Anzahl von Materialschichten, wobei jede Materialschicht im Inneren eines Zylinders einer Anzahl von Zylindern eines Motors angeordnet ist, mit einer Meßvorrichtung (100) gemäß einem der Ansprüche 1 bis 9, bei der:

   - die Mittel zum Ausstrahlen dazu ausgelegt sind, eine Anzahl Lichtstrahlen auszusenden, die durch die elektrischen Steuerungsmittel so gesteuert werden, daß jeder Lichtstrahl eine mit der Modulationsfrequenz $f_m$ des Steuerungssignals sinusförmig modulierte optische Leistung aufweist, wobei sich jeder Lichtstrahl entlang eines ersten Ausbreitungswegs bis zu einer der diesem Lichtstrahl zugeordneten Materialschichten ausbreitet,
   - die photothermischen Erfassungsmittel dazu ausgelegt sind, den Fluß abgestrahlter Wärme jeder durch den dieser Materialschicht zugeordneten Lichtstrahl erwärmten Materialschicht zu erfassen und eine Anzahl Meßsignale abzugeben, wobei jedes Meßsignal für den Fluß von der jeweiligen Materialschicht abgestrahlter Wärme repräsentativ ist, wobei sich jeder Fluß abgestrahlter Wärme entlang eines zweiten Ausbreitungswegs bis zu den photothermischen Erfassungsmitteln ausbreitet,
   - eine Anzahl Umleitungselemente vorgesehen ist, wobei jedes Umleitungselement dazu ausgelegt ist, einen der Lichtstrahlen der Anzahl Lichtstrahlen so umzulenken, daß der erste Ausbreitungsweg jedes Lichtstrahls zwischen dem diesen Lichtstrahl umleitenden Umleitungselement und der diesem Lichtstrahl zugeordneten Materialschicht mit dem zweiten Ausbreitungsweg des entsprechenden Flusses abgestrahlter Wärme überlagert wird,
   - die digitalen Filtermittel dazu ausgelegt sind, aus jedem Meßsignal dessen mit der Modulationsfrequenz $f_m$ des Steuerungssignals modulierte sinusförmige Komponente herauszufiltern, um die Meßphase $\Phi_{mes}$ dieser sinusförmigen Komponente zu bestimmen, und
   - die Rechenmittel dazu programmiert sind, für die Modulationsfrequenz $f_m$ des Steuerungssignals die Phasenverschiebung $\Delta\Phi_{th/opt}$ zwischen der sinusförmigen Komponente des Flusses abgestrahlter Wärme jeder Materialschicht und der modulierten optischen Leistung des Lichtstrahls, dem die Materialschicht zugeordnet ist, zu berechnen und die Dicke jeder Materialschicht in Abhängigkeit von der Phasenverschiebung $\Delta\Phi_{th/opt}$ zwischen der sinusförmigen Komponente des Flusses von dieser Materialschicht abgestrahlter Wärme und die modulierte optische Leistung des Lichtstrahls, dem die Materialschicht zugeordnet ist, zu bestimmen.

**Claims**

1. Measuring device (100) for determining the thickness (d) of a layer (2) of a material, comprising:

    - electrical control means (110) adapted to deliver a sinusoidal control signal (11) having a modulation frequency $f_m$ and a control phase $\phi_{com}$,
    - means (120) for emitting a light beam (121A) electrically controlled by said electrical control means (110) so that said light beam (121A) has an optical power (21) modulated sinusoidally at said modulation frequency $f_m$ of the control signal (11), said light beam (121A) propagating along a first propagation path up to said material layer (2),
    - photothermal detection means (130) adapted to detect a radiated heat flow (131A) by said material layer (2) heated by said light beam (121A) and delivering a measurement signal (133A) which is representative of said radiated heat flow (131A) by said material layer (2), said radiated heat flow (131A) propagating along a second propagation path up to the photothermal detection means (130),
    - digital filtering means (141) adapted to extract from said measurement signal (133A) a sinusoidal component (31A) modulated at said modulation frequency $f_m$ of the control signal (11) to determine a measurement phase $\phi_{mes}$ of this sinusoidal component (31A) of said measurement signal (133A), and
    - calculating means (142) programmed to calculate, for said modulation frequency $f_m$ of the control signal (11), a phase shift $\Delta\phi_{th/opt}$ between a sinusoidal component (31) of said radiated heat flow (131A) and said modulated optical power (21) of the light beam (121A),
    and to determine the thickness (d) of said material layer (2) of as a function of the phase shift $\Delta\phi_{th/opt}$ between said sinusoidal component (31) of said radiated heat flow (131A) and said modulated optical power (21) of the light beam (121A),
    **characterised in that** said measuring device (100) also comprises a deflecting element (181) for the light beam (121A) arranged to deflect said light beam (121A) so that the first propagation path of the light beam (121A) is superposed with the second propagation path of the radiated heat flow (131A), between said deflecting element (181) and said material layer (2), and
    **in that** said measuring device (100) comprises an offset measuring head (250) provided with two parts (254, 255), one of which is rotatably movable (255) with respect to the other (254), the movable part (255) housing at least one reflective element (182) and the other part (254) of the measuring head (250) housing the deflecting element (181), said reflective element (182) being arranged to reflect the light beam (121A) so that a first part of the first propagation path of said light beam (121A), which extends from the deflecting element (181) to the reflective element (182), and a second part of the first propagation path of said light beam (121A), which extends from the reflective element (182) to the material layer (2), form a non-zero angle.

2. Measuring device (100) according to claim 1, wherein the means for emitting (120) comprise a light source the wavelength of which is between 100 and 1800 nanometers, the frequency of which is between 1 and 10000 Hertz, the optical power of which is between 1 and 500 Watt and wherein the diameter of the light beam (121A) is between 1500 and 20000 micrometers.

3. Measuring device (100) according to claim 2, wherein the deflecting element (181) is arranged to propagate without deflection the radiated heat flow (131A) up to the photothermal detection means (130) along the second propagation path.

4. Measuring device (100) according to any one of claims 1 to 3, wherein the deflecting element (181) comprises a rhombohedral prism or an association of at least two plane mirrors disposed parallel to each other.

5. Measuring device (100) according to any one of claims 1 to 4, wherein the reflective element (182) is also arranged to reflect the radiated heat flow (131A) such that a first part of the second radiated heat flow propagation path (131A), which extends from the material layer (2) to the reflective element (182), is superimposed on said second part of the first light beam propagation path (121A) and such that a second part of the second radiated heat flow propagation path (131A), which extends from the reflective element (182) to the deflecting element (181), is superimposed on said first part of the first light beam propagation path (121A).

6. Measuring device (100) according to any one of claims 1 to 5, also including optical collection means (132) that are arranged to focus the radiated heat flow (131A) onto the reflective element (182), said optical collection means (132) being positioned between the reflective element (182) and the material layer (2).

7. Measuring device (100) according to Claim 6, wherein the optical collection means (132) comprise at least one through orifice (132A) allowing the light beam (121A) to pass.

8. Measuring device (100) according to any one of claims 1 to 7, wherein the movable part (255) of the measuring head (250) is rotatable about an axis that is substantially parallel to the first part of the first path of propagation of the light beam (121A).

9. Measuring device (100) according to any one of claims 1 to 8, wherein the measuring head (250) also comprises a movement device (300) arranged to rotate the moving part (255) of the measuring head (250) relative to the other part (254) of the measuring head (250).

10. Use of the measuring device (100) according to any one of claims 1 to 9, wherein the measuring head (250) is positioned such that the distance between the output of the light beam (121A) from the measuring head (250) and the lower layer (2) is less than 4 centimetres.

11. Assembly for simultaneously measuring the thickness of each material layer of a plurality of material layers, each material layer being disposed inside a cylinder of a plurality of cylinders of an engine, comprising a measuring device according to claim 1, wherein:

said means for emitting are adapted to emit a plurality of light beams electrically controlled by said electrical control means so that each light beam has an optical power modulated sinusoidally at said modulation frequency $f_m$ of the control signal, each light beam propagating along a first propagation path up to one of said layers associated with said light beam,
the photothermal detection means are adapted to detect the radiated heat flow by each material layer heated by the light beam to which this material layer is associated, and to deliver a plurality of measurement signals, each measurement signal being representative of the radiated heat flow by said corresponding material layer, each radiated heat flow propagating along a second propagation path up to the photothermal detection means,

- a plurality of deflecting elements are provided, each deflecting element being arranged to deflect one of the light beams of the plurality of light beams so that the first propagation path of each light beam is superimposed with the corresponding second propagation path of the radiated heat flow between the deflecting element deflecting said light beam and the material layer associated with said light beam,
- the digital filtering means are adapted to extract from each measurement signal its sinusoidal component modulated at said modulation frequency $f_m$ of the control signal to determine the measurement phase $\phi_{mes}$ of this sinusoidal component, and
- the calculating means are programmed to calculate, for said modulation frequency $f_m$ of the control signal, the phase shift $\Delta\phi_{th/opt}$ between said sinusoidal component of the radiated heat flow by each material layer and said modulated optical power of the light beam to which this layer of material is associated,

and for determining the thickness of each material layer as a function of the phase shift $\Delta\phi_{th/opt}$ between said sinusoidal component of said radiated heat flow by said material layer and said modulated optical power of the light beam to which said material layer is associated.

# Fig.1

# Fig.2

**Fig.3**

**Fig.4**

$\Delta\phi_{opt/com}$

$\Delta\phi_{th/opt}$

EP 3 781 902 B1

Fig.5

23

## RÉFÉRENCES CITÉES DANS LA DESCRIPTION

**Documents brevets cités dans la description**

- FR 2873946
- US 2007086000 A

- FR 1356404